# EUROPEAN PATENT APPLICATION

(11) **EP 2 139 293 A2**
(43) Date of publication of application: **30.12.2009**
(21) Application number: 09163941.9
(22) Date of filing: 26.06.2009
(51) Int. Cl.: H04W 76/02

(54) **Communication network elements and communication methods therebetween**

(30) Priority: 27.06.2008 GB 0811808
(71) Applicant: Vodafone Group PLC, Newbury Berkshire RG14 2FN (GB)
(72) Inventor: Patanapongpibul, Leo, Dr., Weybridge, Surrey KT13 8JU (GB)
(74) Representative: Keston, David Arthur

(57) **Abstract**

In a communications network an arrangement for transmitting data between a network element of a first type (e.g. BSS) and a network element of a second type (e.g. MSC) is disclosed. A relationship initialisation message is transmitted from the first network element to the second network element, the message including an information element (e.g. BSC-SCL IE) defining one or more communication modes (e.g. CODECs) with which the first network element is configured to communicate.

## Description

### Summary of the invention

The present invention relates generally to a mobile communication system. More particularly, the present invention relates to the transmission of messages between network elements in a mobile communication system. The invention is particularly concerned with the transmission of messages across the A- interface between a base station sub-system (BSS) and a Mobile Switching Centre (MSC).

### Background

The 3rd Generation Partnership Project (3GPP) is a collaboration agreement that brings together a number of telecommunications standards bodies. The purpose of 3GPP is to produce globally applicable Technical Specifications for a 3rd Generation Mobile System based on evolved GSM core networks and the radio access technologies that they support (i.e. Universal Terrestrial Radio Access (UTRA) both Frequency Division Duplex (FDD) and Time Division Duplex (TDD) modes) as well as evolved radio access technologies (e.g. General Packet Radio Service (GPRS) and Enhanced Data rates for GSM Evolution (EDGE)).

As network upgrades are implemented, particularly from one technology to another, it becomes necessary to ensure that these technologies are transitionally compatible, as it is rare that one will wholly take over from another - there will almost always be overlap in their implementations. In particular, various compatibility issues are continually arising in regard to transitioning existing 2G/3G designs to enhanced 3G and even 4G designs, such as the LTE project.

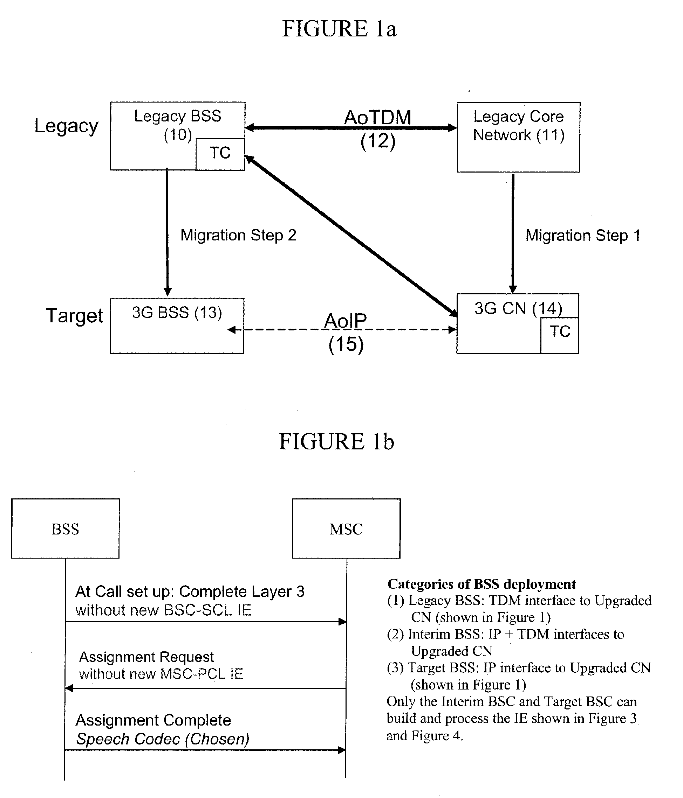

One particular upgrade problem is in relation to compatibility between 2G Base Station Subsystems (BSSs) and 2G core network components, such as MSCs and upgraded 3G BSS and core network components. The problems are illustrated in relation to Figure 1. Firstly, the Figure shows a Legacy BSS 10 (e.g. of 2G GSM design) communicating with a Legacy Core Network 11. The BSS 10 includes at least one Base Station Controller (not shown), each communicating with a plurality of Base Transceiver Stations (BTSs), which are in turn communicating wirelessly with mobile terminals. The mobile terminals communicate with the BTSs across the Um interface, and the BTSs communicate with the BSC across the Abis interface.

It is the A interface across which the BSCs communicate with the Core Network (i.e. with a Mobile Switching Centre (MSC) for control plane communications and with a Media Gateway (MGW), typically a component of the MSC, for user plane communications. In 2G GSM networks the communications across the A-interface 12 use Time Division Multiplexing (TDM). TDM is a transport medium technology which effectively splices two or more data streams into different time slots on a single channel. The A-interface is the interface used for signalling user/control data between the core network and the BSS.

The 3GPP GERAN standardisation body is currently moving towards replacing this TDM framing protocol with Internet Protocol (IP) for use in future 3G systems. IP has the advantages of being cheaper than TDM and of having lower maintenance requirements.

However, as there will be a transition period when both the legacy 2G equipment and the 3G equipment will be coexisting in the network steps need to be taken in order to ensure that they are compatible.

For instance, it is necessary for the Legacy BSS 10 to be able to communicate with the upgraded Core Network 14. Similarly it is necessary for the legacy core network to communicate with upgraded BSSs. However, difficulties arise since the Legacy network elements only support TDM, whilst the Upgraded Core Network 14 supports IP and TDM across the A interface.

It is to be appreciated that eventually all the upgraded elements will be further upgraded so that they only support IP, but this will not be possible until all the legacy elements have been removed from the network.

With regard to the Upgraded Network elements 13, 14 supporting TDM and IP, across the A-interface, there are still difficulties in relation to the Upgraded elements 13,14 knowing/determining whether they are communicating with a Legacy element only supporting TDM or another Upgraded Element, which also supports IP. Even then once it is known that it is communicating with an upgraded network element that is there are difficulties in the selection of the appropriate digital coder/decoder (i.e. codec) to use for communications transmitted across the A-interface.

To illustrate the communications that take place across the A interface, 3GPP TS 48.006 is a specification for GSM EDGE Radio Access Network GERAN based systems, entitled Signalling Transport Mechanism Specification for the Base Station System - Mobile Services Switching Centre (BSS-MSC) Interface.

This specification defines the use of the Message Transfer Part (MTP) and the Signalling Connection Control Point (SCCP) to support signalling messages between the MSC and the BSS. The MTP provides a mechanism giving reliable transfer of signalling messages and the SCCP is used to provide a referencing mechanism to identify a particular transaction relating to for instance a particular call.

One user function of the SCCP, called BSS Application Part (BSSAP) is defined. In the case of point-to-point calls the BSSAP uses one signalling connection per active Mobile Station (MS) having one or more active transactions for the transfer of layer 3 messages. The BSSAP user function is further subdivided into two separate functions:
- the Direct Transfer Application sub-Part (DTAP) is used to transfer messages between the MSC and the MS; the layer-3 information in these messages is not interpreted by the BSS. The descriptions of the layer 3 protocols for the MS-MSC information exchange are contained in the 04-series of 3GPP TS Technical Specifications;
- the BSS Management Application sub-Part (BSSMAP) supports other procedures between the MSC and the BSS related to the MS (resource management, handover control), or to a cell within the BSS, or to the whole BSS. The description of the layer 3 protocol for the BSSMAP information exchange is contained in 3GPP TS 48.008.

With this background in mind, a signalling mechanism has been proposed to assist in the 2G/3G migration across the A-interface, which involves upgraded network elements sending a codec list at the start of a new circuit-switched voice call in order to establish a suitable codec during the set up of the call. To send the codec list, new information elements have been proposed, namely MSC-PCL and BSC-SCL. Figure 1b illustrates a coding proposal for the BSC-SCL/MSC-PCL information elements. These information elements are appended to BSSMAP messages, specifically the BSSMAP Complete Layer 3 Information message, and BSS ASSIGNMENT REQUEST message, respectively.

In this regard, where the connection establishment is undertaken by the MSC on the reception of a voice call, the MSC will send a Connection Request message to the appropriate BSS. The user data field of this message may contain a SETUP or ASSIGNMENT REQUEST message. The BSC will respond to the MSC by sending a Connection Confirm message.

Alternatively, where the connection establishment is performed at the reception by the BSS of the first layer-3 message from a MS, this message (e.g. LOCATION UPDATING REQUEST, CM-SERVICE REQUEST, CM REESTABLISHMENT REQUEST, IMSI DETACH, PAGING RESPONSE, or IMMEDIATE SETUP) is transferred to the MSC in a BSSMAP message (COMPLETE LAYER 3 INFORMATION) included in the user data field of the SCCP Connection Request message.

Where the network element receiving the call set up request message is upgraded (i.e. supports TDM and IP), then that network element will be able to see the BSC-SCL/MSC-PCL information elements included in the message, and select an IP codec therefrom with which it is compatible. This approach however will only work between upgraded network elements (i.e. BSSs and MSCs) with dual compatibility of TDM and IP, but not with legacy network elements only able to communicate using TDM modes. The legacy network elements do not have the ability to process the new MSC-PCL/BSC-SCL information elements. Therefore a legacy BSS receiving an MSC-PCL in the BSSMAP Complete Layer 3 Information message from an upgraded MSC will not be able to process the additional information element, and simply respond with the BSSMAP ASSIGNMENT REQUEST message back to the MSC.

A further problem with this approach is that it is quite laborious and repetitive, as the codec list needs to be sent at the beginning of every circuit-switched call, be it directed to an upgraded network element able to utilise the information or not. This is likely to introduce unnecessary signalling overheads and also impact the handover latency.

There is therefore a need for an improved approach of ensuring compatibility between legacy BSS and upgraded 3G core network components across the signalling A interface. There is also a need for ensuring communications across the A-interface are as efficient as possible.

It is therefore an object of the invention to obviate or at least mitigate the aforementioned problem.

### Summary of the Invention

In accordance with one aspect of the present invention, there is provided in a communications network a method of transmitting data between a network element of a first type and a network element of a second type, the method including transmitting a relationship initialisation message from the first network element to the second network element, the message including an information element defining one or more communication modes with which the first network element is configured to communicate.

Preferably the relationship initialisation message is configured to establish a relationship between the first and second network elements before either element receives a circuit switched call establishment request.

Preferably the first network element is configured to communicate with the second network element using either a TDM communication mode or an IP communication mode.

Preferably the method further includes the second network element transmitting a relationship initialisation acknowledgement message which includes an information element defining one or more communication modes with which the second element is configured to communicate.

Preferably the information element further includes an indication of a preferred packetisation time for subsequent communications.

Therefore, by placing the information elements regarding the preferred 3G communication mode or modes in the initialisation procedure, it becomes possible to reduce both the number of times this information is transmitted between the network elements and the codec negotiation and codec renegotiation signalling overhead.

Further by enabling negotiation of the packetisation rate between the network elements, further communication efficiencies are achievable.

The invention also provides a communications network and network element as defined in the claims.

### Brief Description of the Drawings

For a better understanding of the present invention, reference will now be made, by way of example only, to the accompanying drawings in which:-
Figure 1a illustrates a schematic diagram of the network upgrade deployment scenario, to which the present embodiments of the invention relate;
Figure 1b illustrates a coding proposal for the BSC-SCL and MSC-PCL information elements according to the prior art;
Figure 2a illustrates a codec list initialisation flow diagram, initiated by a BSS towards an MSC according to an embodiment of the invention;
Figure 2b illustrates a codec list initialisation flow diagram, initiated by an MSC towards a BSC according to an embodiment of the invention;
Figure 3 illustrates a table detailing an example of the information an upgraded core network may support in the information element;
Figure 4 illustrates a table detailing an example of the information an upgraded BSS may support in the information element; and
Figure 5 illustrates a table detailing an example of the information an upgraded core network needs to support when incorporating the information element according to an embodiment of the invention in the MSC-SCL BSSMAP message.

### Detailed Description

A first embodiment of the present invention will now be described, which seeks to address the problems in compatibility between legacy network components and upgraded network components.

This first embodiment of the invention strikes a balance between supporting IP-based communications between the upgraded BSS and an upgraded common 2G/3G core network, whilst also being backward compatible, supporting TDM framing transport communications with the legacy BSSs and/or legacy core network components.

According to this embodiment of the invention, codec information is transmitted between the core network and the BSS in the RESET and RESET ACK messages when the upgraded MSC, MGW (a component of the MSC) and/or BSC are first initialised.

It is to be appreciated that the expression "upgraded" network element, is intended to communicate that the network element is configured to implement a first functionality and an enhanced functionality, such as communicate using a 2G mode (e.g. TDM) and a 3G mode (e.g. IP).

The purpose of the reset procedure is to initialise the BSS/MSC in the event of a failure and is described in 3GPP TS 48.008. The procedure is a global procedure applying to a whole BSS, and therefore all messages relating to the reset procedure are sent as global messages using the connectionless mode of the SCCP.

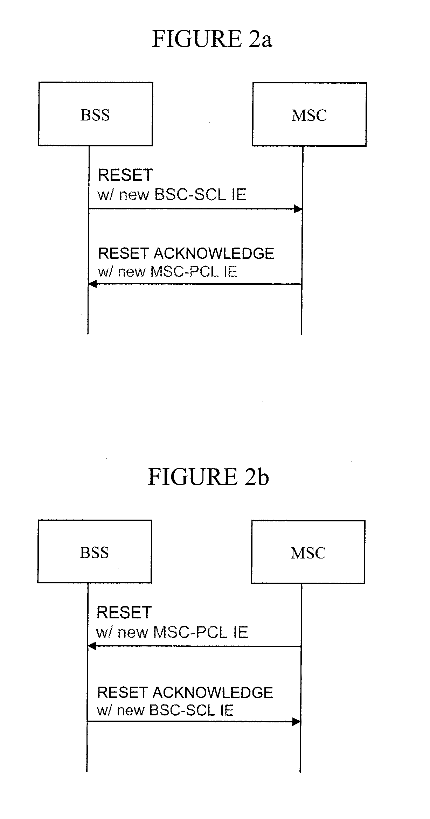

For instance, in the event of a failure at the BSS which has resulted in the loss of transaction reference information, a RESET message is sent to the MSC or, if the network supports "Intra domain connection of RAN nodes to multiple CN nodes" (see 3GPP TS 23.236), to all the MSCs towards which the BSS has signalling connections established. This message is used by the MSC to release affected calls and erase all affected references, and to put all circuits into the idle state. After a guard period of T2 seconds a RESET ACKNOWLEDGE message is returned by the MSC(s) to the BSS indicating that all references have been cleared (see Figure 2a).

The present embodiment of the invention differs over this standard procedure, however, in that the "RESET" message sent by an upgraded network across the A interface includes an information element, such as the previously proposed BSC-SCL. This information element communicates one or more codecs, preferably IP codecs, with which the network element is capable of communicating.

A codec is typically an algorithm, but may be implemented in a device, which is capable of encoding and/or decoding a digital data signal. In the present context, since the digital communications across the A-interface are being transmitted according to the IP mode, the "codec" to be utilised needs to be an IP compatible codec.

Again referring to Figure 2a to illustrate the implementation of this embodiment, upon the upgraded MSC receiving the RESET message from the upgraded BSS, the MSC will be able to extract a list of one or more supported codecs (typically IP codecs), and store this in relation to the BSS/BSC's identity for future use. Further, the MSC will send a RESET ACK message, which preferably includes a list of codecs supported by the MSC, so that the BSS can store the list in relation to the MSC's identity for future use.

Similarly, with reference to Figure 2b, in the event of a failure at an MSC which has resulted in the loss of transaction reference information, a RESET message is sent to the BSS. Where the MSC is an upgraded MSC, this message includes an information element defining one more codecs supported by the MSC. This message is used by the BSS to release affected calls and erase all affected references and to put all circuits into the idle state. Where the BSS is an upgraded BSS, it will also be able to process the additional information element regarding the codecs, and store the list in relation to the MSC's identity for future use.

After a guard period of T3 seconds the BSS returns a RESET ACKNOWLEDGE message to the MSC, indicating that all MSs which were involved in a call are no longer transmitting and that all references at the BSS have been cleared. Where the BSS is an upgraded BSS, it will also send a RESET ACK message, which includes a list of codecs supported by the BSS, so that the MSC can store the list in relation to the BSS's identity for future use.

A particular advantage of this embodiment is that it enables the codec negotiation to only be performed upon initialisation of the BSC or MSC, rather than negotiating the codec list on a per call basis, as per the prior art. This has significant time, signalling and latency advantages over the previously proposed "per call" approach. Advantageously the RESET/RESET ACK control messages can be sent in either direction, meaning that a standard procedure can be applied to both the upgraded MSCs and the BSSs.

This embodiment of the invention may be utilised in relation to any rebooting or reinitialising procedures for the upgraded network elements, such as the UTRAN Reset Resource procedure, which is implemented in the event of an abnormal failure in the Core Network or vice versa (e.g. Signalling Transport processor reset).

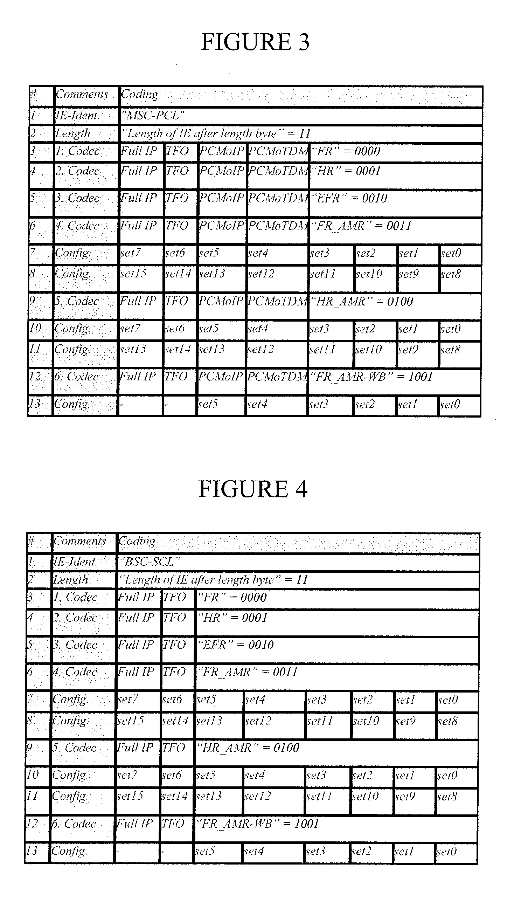

However, the embodiment of the invention just described is only usable by upgraded BSCs and MSCs in deciding the appropriate IP codec to utilise with the upgraded MSCs and BSCs respectively. This is because legacy MSCs and BSCs are unable to build and process the Information Elements, such as those shown in Figures 3 and 4. However, where a BSS/MSC receives a RESET ACK without the additional information element, this is a clear indication that the network element that transmitted the RESET ACK was unable to process the information element, and so is a legacy network element. Therefore, in this situation the upgraded MSC/BSS will default to transmitting communications in a TDM mode.

Another aspect of this embodiment of the invention is that where the upgraded MSC determines that it is to communicate with a legacy BSS, it also designates the transcoder to be utilised, where more than one are available. In this regard, in the legacy 2G network, the transcoder is located in the BSS. In the upgraded MSC, however, the transcoder is located in the MSC. Upgraded BSSs will no longer have the transcoder unit, as transcoders convert the analogue GSM signal to a digital TDM signal, whereas the upgraded network elements are geared towards receiving digital 3G signals.

Therefore, it is to be appreciated that the transcoder is a device only required when there is TDM mode communications, as it converts the analogue voice channel coding between a GSM coder and the digital PCM (Pulse Code Modulation) standard (G.711) for transmission of voice data over TDM. Therefore, in the situation of a legacy BSS communicating with an upgraded 2G/3G MSC, both elements will have a transcoder, which is not desirable - only one device needs to perform the conversion. Therefore, by the upgraded MSC choosing the transcoder to use where a number are available, it becomes possible to efficiently manage the selection of the transcoder on a per call basis. Transcoding should be avoided to reduce speech path delays, but if it is needed, the transcoder in the BSS or the MSC can be used depending on the availability of the transcoder resources.

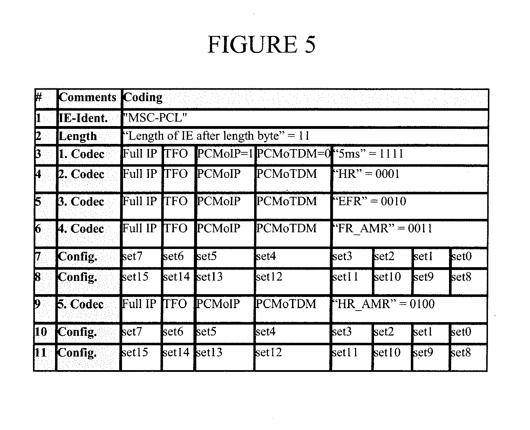

According to an additional embodiment of the invention, a further functionality is able to be achieved through the use of the additional information elements. In this regard, for G.711 PCM transmissions over the A-interface, two packetisation times are possible, namely 20ms and 5ms. The PCM packetisation time for a TDM transport interface conforms with RFC3551, and is 20ms. However, depending on the MGW manufacturer, the PCM packetisation time may be 5ms in the core network. The benefit of utilising the 5ms packetisation time on the A-interface with IP transport is the elimination for the need to segment/reassemble PCM data between the A interface and the Nb interface (a core network interface). Therefore, to take advantage of the faster packetisation time that may be available, a new parameter is added to the MSC-PCL information element which allows the core network to signal to the BSS when the preferred packetisation time of 5ms is available. This is illustrated in relation to Figure 5, where a new field has been added to the codec "coding", to indicate whether or not the 5ms time is available. Advantageously, this additional field can be added to the MSC-PCL without requiring extra bits to be added.

As a default, where this information is not signalled in the information element, the PCM packetisation time is the standard 20ms.

In case 5ms PCM packetisation time over the A-interface with IP transport is the default value, then it is the necessary to signal 20ms in the new field of the MSC-PCL information element to force a PCM packetisation time of 20ms over the A-interface with IP transport..

This packetisation embodiment of the invention may be utilised in conjunction with the first embodiment of the invention, where the information elements are transmitted with the RESET/RESET ACK messages. In addition, it may be utilised with the prior art embodiment of the invention where additional messages are transmitted during the call set up phase.

The embodiments of the present invention have essentially been described in relation to their usage with upgraded network elements having TDM and IP transport modes. However, it is to be appreciated that the embodiments may equally be applied to the target network elements having only IP transport modes.

It is also to be appreciated that the codecs described herein are exemplary only, and various other codecs may be utilised, depending upon the network requirements. In this regard, it is also intended to cover wideband codecs (such as AMR-WB, VMR-WB) and narrowband codecs (e.g. CELP) as well as various applicable bit rates of all. It is also not essential that the codecs are IP codecs, and that the embodiments of the invention may be applied to other communication protocols, as applicable.

## Claims

1. In a communications network a method of transmitting data between a network element of a first type and a network element of a second type, the method including:
transmitting a relationship initialisation message from the first network element to the second network element, the message including an information element defining one or more communication modes with which the first network element is configured to communicate.

2. The method of claim 1 wherein the relationship initialisation message is configured to establish a relationship between the first and second network elements before either element receives a circuit switched call establishment request.

3. The method of any one preceding claim wherein the first network element is configured to communicate with the second network element using either a TDM communication mode or an IP communication mode.

4. The method of any one preceding claim further including the second network element transmitting a relationship initialisation acknowledgement message which includes an information element defining one or more communication modes with which the second element is configured to communicate.

5. The method of any one preceding claim wherein the information element further includes an indication of a preferred packetisation time for subsequent communications.

6. A communications network element of a first type for transmitting data to or receiving data from a network element of a second type, the first network element being operable to transmit a relationship initialisation message from the first network element to the second network element, the message including an information element defining one or more communication modes with which the first network element is configured to communicate.

7. A network element configured to perform the method according to any one of claims 1 to 5.

8. The network element of claim 6 or 7, wherein the network element is a base station controller or a Mobile Switching Centre or a component thereof.

9. The network element of claim 6,7 or 8, wherein the network element is configured to transmit communications conforming to a Time Division Multiplexing format or an Internet Protocol format.

10. A communications network including a network element of a first type and a network element of a second type, wherein the first network element is operable to transmit a relationship initialisation message from the first network element to the second network element, the message including an information element defining one or more communication modes with which the first network element is configured to communicate.

11. The network of claim 10, wherein the relationship initialisation message is configured to enable the establishment of a relationship between the first and second network elements before either element receives a circuit switched call establishment request.

12. The network of claim 10 or 11, wherein the first network element is configured to communicate with the second network element using either a TDM communication mode or an IP communication mode.

13. The network of claims 10,11 or 12, wherein the second network element is operable to transmit a relationship initialisation acknowledgement message which includes an information element defining one or more communication modes with which the second element is configured to communicate.

14. The network of claim 10,11,12 or 13, wherein the information element further includes an indication of a preferred packetisation time for subsequent communications.
